# EUROPÄISCHE PATENTSCHRIFT

(11) **EP 2 043 905 B1**
(45) Veröffentlichungstag und Bekanntmachung des Hinweises auf die Patenterteilung: **10.03.2010**
(21) Anmeldenummer: 07787602.7
(22) Anmeldetag: 16.07.2007
(51) Int. Cl.: B62D 53/12, B60D 1/62

(54) **STECKERKONSOLE FÜR EINEN AUFLIEGER EINES SATTELZUGES**
CONNECTOR BRACKET FOR A SEMITRAILER OF A SEMITRAILER TRUCK
CONSOLE DE CONNEXION POUR SEMI-REMORQUE DE TRAIN ROUTIER

(30) Priorität: 18.07.2006 DE 102006033899
(43) Veröffentlichungstag der Anmeldung: 08.04.2009
(73) Patentinhaber: Jost-Werke GmbH, 63263 Neu-Isenburg (DE)
(72) Erfinder: ALGÜERA, José Manuel, 63739 Aschaffenburg (DE); EIERMANN, Michael, 64319 Pfungstadt (DE); RICHTER, Martin, 60316 Frankfurt am Main (DE)
(74) Vertreter: Mehler, Klaus
(86) Internationale Anmeldenummer: PCT/EP2007/057336
(87) Internationale Veröffentlichungsnummer: WO 2008/009660

(56) Entgegenhaltungen:
- WO-A-01/46001
- WO-A-03/039940
- WO-A-2005/110836
- DE-A1- 10 344 253

## Beschreibung

Die Erfindung betrifft eine Steckerkonsole für einen Auflieger eines Sattelzuges, umfassend ein um ein Lager schwenkbares Tragelement und einen in dem Tragelement angeordneten Stecker, wobei das Tragelement einen Gehäuserahmen mit einem komplementär zu einer Einfahröffnung einer Sattelkupplung ausgeformten Abschnitt aufweist. Darüber hinaus ist die Erfindung auch an einem Steckkupplungssystem verwirklicht.

Derartige Steckerkonsolen und Steckkupplungssysteme kommen an Sattelzügen zum Einsatz, um nach einem mechanischen Ankuppeln des Aufliegers auch die Versorgungsleitungen des Zugfahrzeugs mit dem Auflieger weitgehend automatisiert zu verbinden, so dass der Fahrer nicht mehr zwischen das Zugfahrzeug und den Auflieger klettern und dort die Versorgungsleitungen beispielsweise für die Druckluft- und Stromversorgung von Hand stecken muss.

Einen gattungsbildenden Stand der Technik offenbart die DE 10 2004 024 333 A1 mit einem Steckkupplungssystem, bei dem eine aufliegerseitige Steckvorrichtung mit einem ortsfest darin angeordneten Stecker in eine unterhalb der Einfahröffnung angeordnete Steckerbuchse eingefahren wird. Dieses erfolgt während des Einfahrens eines auf der Unterseite des Aufliegerbodens befindlichen Königszapfens in die Sattelkupplung. Die Steckvorrichtung weist dafür eine keilförmige, auf die Geometrie der Einfahröffnung abgestimmte Form auf, so dass diese von der Einfahröffnung formschlüssig fixiert ist. Bei Kurvenfahrten des Sattelzuges schwenkt die Steckvorrichtung in fixierter Position innerhalb der Einfahröffnung aufgrund ihrer drehbaren Anbringung um den Königszapfen herum. Der wesentliche Nachteil dieses bekannten Systems besteht darin, dass der aufliegerseitige Stecker in Fahrtrichtung offen ist und im Fahrbetrieb einer erheblichen Verschmutzung ausgesetzt ist. Diese Problematik verschärft sich noch, wenn mit der bekannten Steckvorrichtung ausgerüstete Auflieger in gemischten Fuhrparks eingesetzt werden, deren Zugfahrzeuge mit noch keiner komplementär zu dem Stecker ausgebildeten Steckerbuchse ausgerüstet sind, da dann vom Zugfahrzeug aufgewirbelte Feststoffe bis in den entgegen der Fahrtrichtung ausgerichteten Stecker gelangen können. In den Wintermonaten kann es auch vorkommen, dass die Steckvorrichtung durch Vereisung nicht mehr funktionstüchtig ist.

Aus diesem Grund liegt der Erfindung die Aufgabe zugrunde, eine Steckerkonsole beziehungsweise ein Steckkupplungssystem bereitzustellen, welche(s) auch bei widrigen äußeren Einflüssen eine hohe betriebliche Verfügbarkeit ermöglicht.

Die Aufgabe wird erfindungsgemäß mit einer Steckerkonsole gelöst, bei welcher der Gehäuserahmen durch Kontaktierung mit der Einfahröffnung gegenüber dem Stecker verschiebbar und dadurch der Stecker aus einer geschlossenen Bereitschaftsstellung in eine geöffnete Kupplungsstellung verfahrbar ist.

In der geschlossenen Bereitschaftsstellung ist der Stecker vollständig in das kastenförmige Tragelement eingetaucht und dadurch vor äußeren Einflüssen geschützt. Während des Einfahrens des Königszapfens in die Einfahröffnung der Sattelkupplung stößt das Tragelement mit einem zu der Geometrie der Einfahröffnung komplementären Abschnitt gegen die seitlichen Wandungen der Einfahröffnung. Bei einem weiteren Einfahren des Königszapfens bis zu Verrastung dessen in der Verschlussmechanik der Sattelkupplung wird der Gehäuserahmen des Tragelementes gegenüber dem Königszapfen lateral nach hinten geschoben und der Stecker für eine Kontaktierung mit einer zugfahrzeugseitigen Steckerbuchse freigegeben.

Ein wesentlicher Vorteil der erfindungsgemäßen Steckerkonsole, liegt darin, dass der Stecker mechanisch zwischen der Bereitschafts- und der Kupplungsstellung verfahrbar ist. Es ist daher nicht notwendig, eine autarke Energieversorgung des Aufliegers vorzusehen oder an dem Auflieger zusätzliche Stellmotoren zu installieren. Da das Tragelement an die ISO-Kontur der Einfahröffnung angepasst ist, können problemlos mit der Steckerkonsole ausgerüstete Auflieger von Zugfahrzeugen mit konventionellen, von Hand zu steckenden Versorgungsleitungen aufgenommen werden.

Es hat sich als besonders günstig herausgestellt, den Stecker in Fahrtrichtung federnd zu lagern, damit sich im Fahrbetrieb das Längsspiel zwischen Sattelkupplung und Königszapfen nicht auf den Stecker überträgt, was zu einem erhöhten Verschleiß führen würde.

Gemäß einer vorteilhaften Ausführungsform umfasst das Tragelement einen Tragrahmen, welcher an dem Lager angreift. Der Tragrahmen stellt bei dieser konstruktiven Ausgestaltung eine ortsfeste Verbindung von Komponenten des Tragelementes zu dem Königszapfens beziehungsweise dem vorzugsweise darum ringförmig angeordnete Lager und dem während der Kupplungsvorgänge von Zugfahrzeug und Auflieger beweglichen Gehäuserahmen dar. Die Position des Königszapfens nach einer Verriegelung der Verschlussmechanik definiert zusammen mit der Länge des Tragrahmens die Position des Tragelementes innerhalb der Einfahröffnung der Sattelkupplung.

Günstigerweise ist der Stecker auf einem Verschlussblech angeordnet, welches mittels einer Zwangsführung gegenüber dem Gehäuserahmens geführt ist. Das Verschlussblech verschließt in der Bereitschaftsstellung das Tragelement nach unten oder auch gemäß einer bevorzugten Ausführungsform nach hinten. Während des Kuppelvorganges des Steckers an die Steckerbuchse des Zugfahrzeugs verfährt der Gehäuserahmen in horizontaler Richtung entgegen der Fahrtrichtung, wobei das Verschlussblech in vertikaler Richtung auf ein durch die Zwangsführung vorgesehenes Niveau verschoben wird.

Die Zwangsführung kann beispielsweise eine Kulissensteuerung sein.

Vorzugsweise umfasst die Kulissensteuerung zwei ortsfest an dem Gehäuserahmen ausgebildete Kulissenwände und darin eingreifende Führungsnocken des Verschlussbleches. Die Kulissenwände sind bevorzugt jeweils als doppelte Wand ortsfest an die in Fahrtrichtung ausgerichteten beiden gegenüberliegenden seitlichen Wände des Gehäuserahmens eingeschweißt.

In einer besonders bevorzugten Ausführungsform ist die Kulissenwand jeweils mit zwei U-förmigen Kulissen ausgebildet. Bei dieser Ausführungsform können vorne an dem Verschlussblech angeordnete zwei Führungsnocken in die jeweils in Fahrtrichtung vorne befindlichen U-förmigen Kulissen eingreifen und zwei hintere Führungsnocken in die gegenüberliegenden hinteren U-förmigen Kulissen. Die Führungsnocken sollten derart beschaffen sein, dass ein seitliches Herausrutschen aus der jeweiligen Kulisse verhindert wird. Die gegenüberliegenden Kulissen sollten einen spiegelbildlichen Kulissenverlauf aufweisen. Mit Hilfe der zueinander beabstandeten Kulissen ist es möglich, das Verschlussblech insbesondere mit dem darauf befindlichen Stecker zum Erreichen der Kupplungsstellung unter Ausnutzung der Lageänderung des Gehäuserahmens in eine vertikal zum Gehäuserahmen versetzte Lage in der Kupplungsstellung zu bewegen.

Dabei können die jeweils zwei in einer Kulissenwand ausgebildeten Kulissen nebeneinander in horizontaler Richtung versetzt angeordnet sein. Bei zwei gegenüberliegenden Kulissenwänden werden demzufolge die vorderen beiden Führungsnocken des Verschlussbleches in dem vorderen Kulissenpaar und die hinteren beiden Führungsnocken in dem hinteren Kulissenpaar zwangsgeführt. Dieses hat den Vorteil, dass die in den vorderen Kulissen befindlichen vorderen Führungsnocken auf einer räumlich von den hinteren Kulissen unabhängigen Bahn verfahren werden und dadurch eine entsprechende auch schräge Stellung des Verschlussbleches über den Verfahrweg des Gehäuserahmens darstellbar ist.

Günstigerweise weist die jeweils vordere U-förmige Kulisse einen vorderen sich in Fahrtrichtung aufweitenden Schenkel auf. Gemäß einer vorteilhaften Ausgestaltung ist dann auch zwischen dem Tragrahmen oder dem Hebelblech und dem Verschlussblech mindestens eine Vertikalfeder angeordnet. Der sich konisch aufweitende Schenkel ermöglicht mit Hilfe der Vertikalfeder ein Widerverschließen des Verschlussbleches, falls in der nach unten abgesenkten Kupplungsstellung des Verschlussbleches keine zugfahrzeugseitige Steckerbuchse vorhanden ist.

Das Federelement würde dann die vorderen Führungsnocken in vertikaler Richtung gegen den oberen Rand des jeweils vorderen aufgeweiteten Schenkel ziehen. Ist dagegen eine Steckerbuchse vorhanden, stützen sich die vorderen Führungsnocken am unteren Rand der aufgeweiteten Führung ab.

Vorteilhafterweise weist das Tragelement ein Hebelblech auf, welches mit einem ersten Ende an dem Tragrahmen und dem gegenüberliegenden zweiten Ende an dem Verschlussblech gelenkig angreift. Unter dem Begriff Hebelblech werden auch einzelne Hebel unabhängig von ihrer materiellen Beschaffenheit verstanden. Das Hebelblech ist grundsätzlich mit einem Ende an einem ortsfesten Bauteil angebracht. Das gegenüberliegende Ende dagegen hindert das Verschlussblech daran, beim Zurückschieben des Gehäuserahmens ebenfalls in gleichem Maße zurückgedrückt zu werden. Die Verbindung des Verschlussbleches mit dem in lateraler Richtung ortsfesten Tragrahmen ermöglicht über die Kulissenführung ein Herausfahren des Steckers zusammen mit dem Verschlussblech.

Vorzugsweise ist das Hebelblech oder der Tragrahmen mit einer Blende ausgebildet, welche insbesondere in vorgefahrener Position des Gehäuserahmens ohne Vorhandensein eines Zugfahrzeugs den Stecker abdeckt. Bei dieser Blende handelt es sich um ein nach unten gewölbtes Blech, welches bei einer Befestigung an dem Tragrahmen ortsfest oder bei einer Befestigung an dem Hebelblech aufgrund dessen gegenüber dem Verschlussblech geringen Beweglichkeit annähernd ortsfest angebracht ist. Je nach Position des Verschlussbleches und des darauf angeordnete Steckers wandert dieser mehr oder weniger hinter die Blende.

Zwischen dem Tragrahmen oder dem Hebelblech und dem Gehäuserahmen kann mindestens eine Gehäuserückholfeder angeordnet sein. Besonders bevorzugt sind zwei parallel angeordnete Gehäuserückholfedem vorhanden. Die Gehäuserückholfeder sorgt für ein Zurückziehen des Gehäuserahmens entgegen der Bewegungsrichtung beim Einkuppeln des Königszapfens, so dass der Gehäuserahmen beim Absatteln nach Aufhebung des Formschlusses mit der Einfahröffnung der Sattelkupplung in die Bereitschaftsstellung zurückgezogen wird.

Es hat sich als besonders günstig herausgestellt, wenn in dem Gehäuserahmen in Längsrichtung mindestens eine Führungsschiene angeordnet ist. Anstelle von einer Führungsschiene können auch zwei parallele Stäbe in vollständiger Länge durch den Gehäuserahmen verlaufen und dabei durch einen feststehenden Abschnitt des Tragrahmens hindurchgeführt sein. Die mindestens eine Führungsschiene sorgt dafür, dass der Gehäuserahmen beim horizontalen Zurückbewegen in vertikaler Richtung fixiert ist.

Alternativ zu der vorstehend beschriebenen Ausführungsform kann das Verschlussblech auch flexibel ausgestaltet und in geschlossener Stellung vorgespannt eingebaut sein. Hierfür bietet sich insbesondere eine zweiteilige Ausführung des Verschlussbleches an, bei der ein unteres Blech flexibel und ein darüber liegendes, den Stecker tragendes weitgehend starres Blech verwendet werden. Aufgrund der materialimmanenten Rückstellkräfte sorgt das untere, flexible Blech für ein Verschließen des Tragelementes nach unten und benötigt keine zusätzlichen Federelemente, wie beispielsweise Vertikalfedern.

Die Teilaufgabe wird auch durch ein Steckkupplungssystem mit einer aufliegerseitigen Steckerkonsole und einer unterhalb einer Einfahröffnung einer Sattelkupplung angeordnete Steckerbuchse gelöst. Erfindungsgemäß ist auch hierbei der Gehäuserahmen durch Kontaktierung mit der Einfahröffnung gegenüber dem Stecker verschiebbar und dadurch der Stecker aus einer geschlossenen Bereitschaftsstellung in eine geöffnete Kupplungsstellung verfahrbar, wobei jedoch die Steckerbuchse ebenfalls eine Verschlussblende aufweist. Die Verbindung von Stecker und Steckerbuchse erfolgt allein durch das Einfahren des Königszapfens in die Sattelkupplung. Aufgrund der Ausrichtung von Stecker und Steckerbuchse in Fahrzeuglängsrichtung nimmt das Steckkupplungssystem auch bei einer Notbetätigung der Verschlussmechanik zum Lösen des Aufliegers keinen Schaden. In diesen Fällen werden Stecker und Steckerbuchse wie beim regulären Abkuppeln des Aufliegers auseinander gezogen und dadurch voneinander gelöst.

Das erfindungsgemäße System schützt weitgehend sowohl den Stecker als auch die Steckerkonsole vor einer Verschmutzung.

Die Anordnung der Steckerkonsole unterhalb der Einfahröffnung sollte auch der ISO-Kontur von Sattelkupplungen entsprechen. Dieses ermöglicht das Aufsatteln eines konventionellen Aufliegers mit einem Zugfahrzeug, welches bereits mit einer Steckerbuchse ausgerüstet ist.

Vorzugsweise stößt das Tragelement die Verschlussblende bei einer Annäherung an diese auf. Auch hierbei sind keine zusätzlichen Stellmotoren notwendig. Das Aufstoßen der Verschlussblende kann beispielsweise über einen Steuernocken erfolgen.

Günstigerweise erfolgt nach dem Kontaktieren von Stecker und Steckerbuchse eine Vertikalbewegung, bei welcher ein Verriegelungselement der Steckerbuchse formschlüssig an den Stecker greift. Hierdurch wird der Stecker in der Steckerbuchse verriegelt. Das Verriegelungselement kann zum Beispiel als feststehende Kulisse ausgeformt sein. Durch die Aufwärtsbewegung der Steckerbuchse während des Einfahrens in den Stecker verschiebt sich dann die Steckerbuchse gegenüber dem ortsfest angeordneten Verriegelungselement.

Die Verriegelung des Steckers in der Steckerbuchse erfolgt vorzugsweise spielfrei, um Bewegungen in kontaktiertem Zustand und damit eine beschleunigte Korrosion zu verhindern.

Zum besseren Verständnis wird die Erfindung nachfolgend anhand von 10 Figuren erläutert. Dabei zeigen die:
- **Fig. 1:**: eine Sprengansicht auf eine erfindungsgemäße Steckerkonsole;
- **Fig. 2:**: eine Seitenansicht auf einen Tragrahmen, eine Kulissenwand, ein Hebelblech und ein Verschlussblech ;
- **Fig. 3:**: einen Querschnitt durch ein um den Königszapfen angeordnetes Lager und den oberen Bereich der Steckerkonsole;
- **Fig. 4:**: eine Seitenansicht auf eine Sattelkupplung mit daran angeordneter Steckerbuchse in einer Ausgangsstellung;
- **Fig. 5:**: eine perspektivische Hinteransicht auf eine Sattelkupplung mit daran angeordneter Steckerbuchse in einer Ausgangsstellung;
- **Fig. 6:**: eine Seitenansicht auf eine Sattelkupplung mit daran angeordneter Steckerbuchse bei nach hinten heruntergeklappter Sattelkupplung in Verriegelungsstellung;
- **Fig. 7a:**: eine Seitenansicht auf eine Steckerkonsole in abgesateltem Zustand;
- **Fig. 7b:**: eine perspektivische Unteransicht auf die Steckerkonsole gemäß Fig. 7a;
- **Fig. 8a:**: eine Seitenansicht auf eine Steckerkonsole während des Aufsattelns unmittelbar vor der Kontaktierung von Stecker und Steckerbuchse;
- **Fig. 8b:**: eine perspektivische Unteransicht auf die Steckerkonsole gemäß Fig. 8a;
- **Fig. 9a:**: eine Seitenansicht auf eine Steckerkonsole nach dem Aufsatteln nach der Kontaktierung von Stecker und Steckerbuchse;
- **Fig. 9b:**: eine perspektivische Unteransicht auf die Steckerkonsole gemäß Fig. 9a;
- **Fig. 10a:**: eine Seitenansicht auf eine Steckerkonsole nach dem Aufsatteln ohne Kontaktierung mit einer Steckerbuchse und
- **Fig. 10b:**: eine perspektivische Unteransicht auf die Steckerkonsole gemäß Fig. 10a.

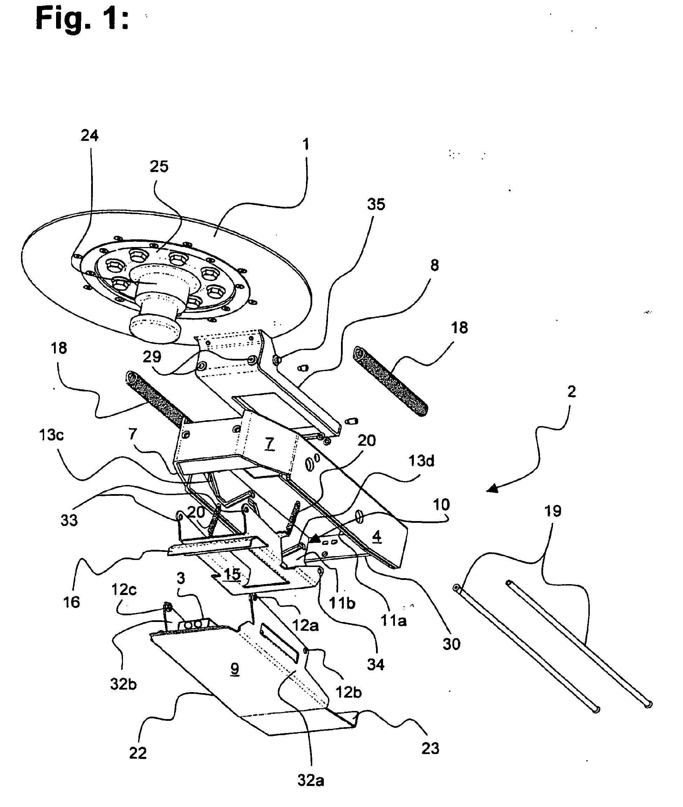

Die Figur 1 zeigt eine dreidimensionale Unteransicht versprengter Komponenten der erfindungsgemäßen Steckerkonsole. Das Tragelement 2 greift dabei mittels eines starren Tragrahmens 8 an einem Lager 1 an und ist dadurch schwenkbar an der Unterseite eines nicht gezeigten Aufliegers angeordnet. Das Lager 1 umgibt konzentrisch einen Königszapfen 24. Der Königszapfen 24 ist mit einem Befestigungsteller 25 drehfest an der Unterseite des Aufliegers angeschraubt.

An dem Tragrahmen 8 ist in horizontaler Richtung verschiebbar ein Gehäuserahmen 4 befestigt. Die horizontale Verschiebbarkeit wird durch zwei parallele, in Längsrichtung durch den Gehäuserahmen 4 verlaufende Führungsschienen 19 realisiert, welche als zylindrische Stäbe ausgebildet und über jeweils ein Gleitlager 29 an dem Tragrahmen 8 geführt sind.

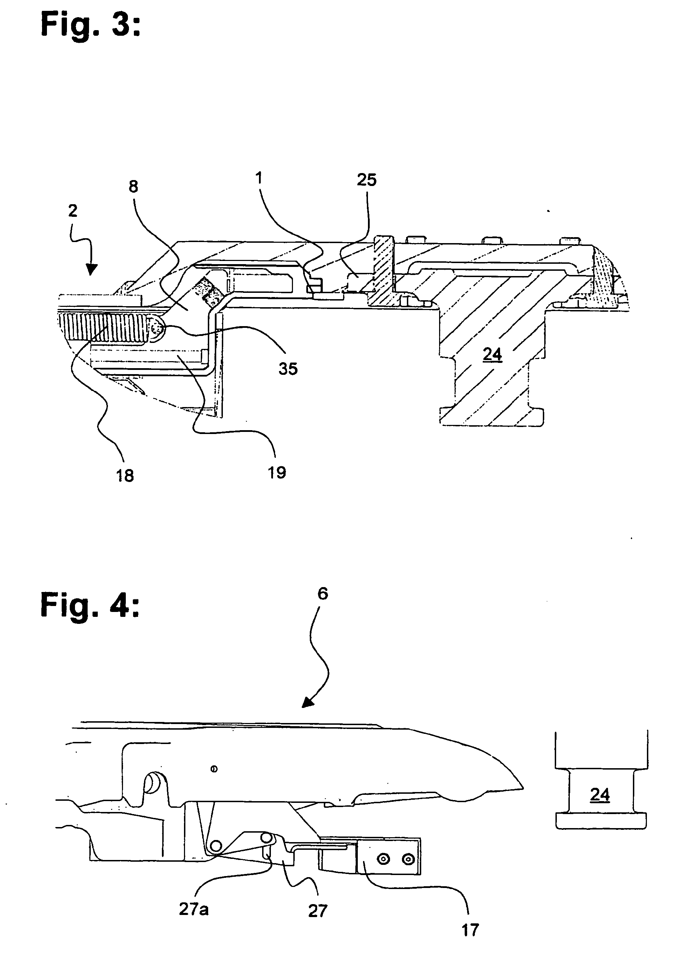

Ohne das Vorhandensein einer Sattelkupplung 6 (siehe Figur 4) wird der Gehäuserahmens 4 über zwei Gehäuserückhoffedern 18 in einer vorderen Position gehalten, das heißt mit geringem Abstand zum Königszapfen 25. Die Gehäuserückhoffedern 18 sind dafür an einem Ende an dem Tragrahmen 8 und dem anderen Ende an der Rückwand 30 des Gehäuserahmens 4 eingehängt. Die Gehäuserückholfedern 18 verlaufen beidseitig zwischen dem innen liegenden Tragrahmen 8 und dem Gehäuserahmen 4. Diese vordere Position des Gehäuserahmens 4 entspricht der geschlossenen Bereitschaftsstellung des Tragelementes 2.

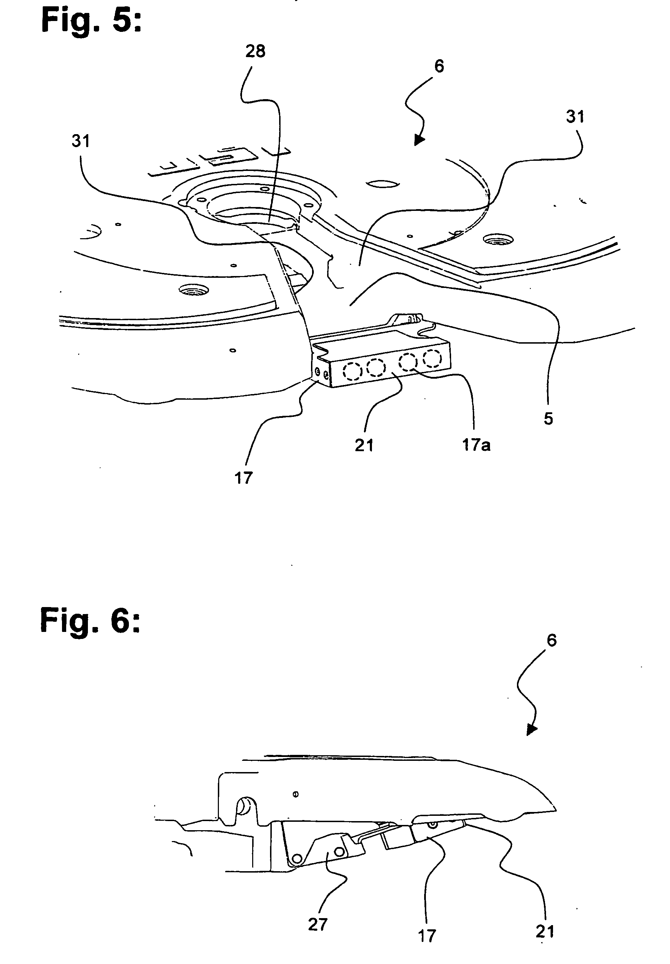

Der Gehäuserahmen 4 weist eine überwiegend kastenartige Grundform mit einem rechteckigen Querschnitt auf. An seinem vorderen Ende sind beidseitig schräg zulaufende Abschnitte 7 zu erkennen, deren Neigungen entsprechend der Neigung von Seitenwänden 31 einer Einfahröffnung 5 der Sattelkupplung 6 ausgebildet sind, wie besonders gut in Figur 5 zu erkennen ist. Der Abschnitt 7 stößt während des Einfahrens des Königszapfens 24 in die Sattelkupplung 6 gegen die Seitenwände 31 und richtet das Tragelement 2 mittig in Fahrzeuglängsrichtung aus. Da der Gehäuserahmen 4 federvorgespannt gegenüber dem Tragrahmen 8 befestigt ist, bleibt dieser Kontakt und somit die mittige Ausrichtung des Tragelementes 2 auch während des Fahrbetriebes bestehen.

Auf der Innenseite der parallelen Seitenwände des Gehäuserahmens 4 ist jeweils eine Kulissenwand 11a, 11b eingeschweißt, von denen in der Darstellung der Figur 1 besonders gut die Kulissenwand 11 b erkennbar ist. Die Kulissenwand 11 a ist mit zwei horizontal beabstandeten V-förmigen Kulissen 13a, 13b und die Kulissenwand 11 b mit ebenfalls zwei spiegelbildlich ausgeformten Kulissen 13c, 13d versehen.

Der Gehäuserahmen 4 ist in der Bereitschaftsstellung nach unten mit einem Verschlussblech 9 verschlossen. Das Verschlussblech 9 trägt auf seiner Oberseite den Stecker 3, welcher bei Vorhandensein einer zugfahrzeugseitigen Steckerbuchse 17 (siehe Figur 4) in eine aus dem Gehäuserahmen 4 abgesenkte Kupplungsstellung abgesenkt ist. Das Verschlussblech 9 weist an beiden Längsseiten empor stehende Seitenlaschen 32a, 32b auf, in die jeweils Führungsnocken 12a, 12b und 12c, 12d eingesetzt sind. In montiertem Zustand ragen die vorderen Führungsnocken 12a, 12c in die beiden vorderen Kulissen 13a, 13c und die hinteren Führungsnocken 12b, 12d in die beiden hinteren Kulissen 13b, 13d. Die Kulissen 13a-d und die Führungsnocken 12a-d bilden zusammen eine Zwangsführung 10 des Verschlussbleches 9.

Die Kraftübertragung des verschiebbaren Gehäuserahmens 4 auf das Verschlussblech 9 erfolgt über ein Hebelblech 15. Das Hebelblech 15 ist dafür mit zwei vorderen Befestigungsbohrungen 33 versehen, in welche im montierten Zustand beidseitig des Tragrahmens 8 vorstehende Vorsprünge 35 hineinragen. Die hinteren Befestigungsbohrungen 34 sind gelenkig mit den hinteren Führungsnocken 12b, 12d des Verschlussbleches 9 verbunden. Bei einem Zurückfahren des Gehäuserahmens 4 wird ist das Verschlussblech 9 über das Hebelblech 15 daran gehindert, ebenfalls zusammen mit dem Gehäuserahmen 4 zurückzufahren und anstelle dessen dem Verlauf der Kulissen 13a, 13b, 13c, 13d zu folgen.

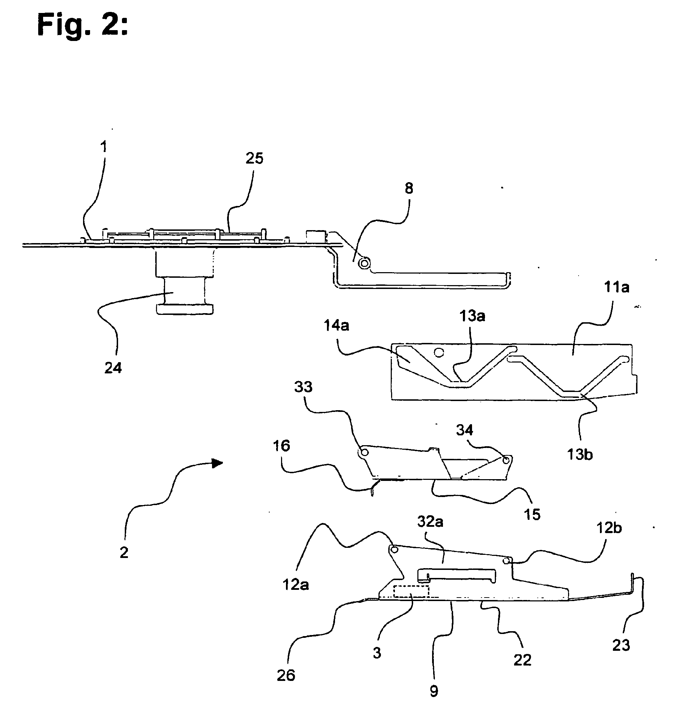

Die Figur 2 zeigt in einer Seitenansicht einen Tragrahmen 8, eine Kulissenwand 11a, ein Hebelblech 15 und ein Verschlussblech 9, welche zusammen mit weiteren nicht gezeigten Bauteilen das Tragelement 2 bilden. Die Kulissenwand 11 a ist üblicherweise auf der Innenseite in den Gehäuserahmen 4, welcher zur Verdeutlichung in der Figur 2 weggelassen wurde, eingeschweißt. Grundsätzlich ist es auch möglich, den Gehäuserahmen 4 selbst mit entsprechend ausgeformten Kulissen 13a-13d auszubilden. Das spätere Einbringen von Kulissenwänden 11 a, 11 b hat jedoch den Vorteil einer vereinfachten Fertigung. Darüber hinaus sind die Kulissen 13a-13d durch den Gehäuserahmen 4 vollständig abgedeckt, wodurch der Eintrag von Schmutzpartikeln in das Tragelement 2 deutlich reduziert wird.

Die in der Figur 2 zu erkennenden Kulissen 13a, 13b weisen eine vergleichbare symmetrische V-förmige Formgebung auf und sind in horizontaler Richtung nebeneinander angeordnet. Durch eine zueinander leicht versetzte vertikale Anordnung lässt sich in horizontaler Richtung Bauraum einsparen.

Ein vorderer Kulissenschenkel 14a weitet sich in Richtung des Königszapfens 24 konisch auf, so dass der darin geführte vordere Führungsnocken 12a des Verschlussbleches 9 mit einem vertikalen Spiel gelagert ist.

Das Hebelblech 15 ist auf seiner Unterseite plattenartig ausgebildet. In einem vorderen Bereich greift daran eine nach unten gewölbte Blende 16 an, in dessen Abdeckung der Stecker 3 bei einem in den Kulissen 13a-13d nach vorne geschobenen Verschlussblech 9 eintaucht.

Das Verschlussblech 9 umfasst eine ebene Bodenwand 22 und die daran senkrecht empor ragenden Seitenlaschen 32a, 32b, von denen in der Seitenansicht lediglich die Seitenlasche 32a mit den Führungsnocken 12a, 12b sichtbar ist. Ebenfalls verdeckt durch die Seitenlasche 32a und daher nur gestrichelt dargestellt, ist der Stecker 3. An dem vorderen Ende weist die Bodenwand 22 eine daran angreifende, nach unten abgewinkelte Einlaufkante 26 auf. Diese dient dazu, bei einer Annäherung des Tragelementes 2 an eine ortsfeste Steckerbuchse 17 (siehe Figur 4) ein Einstoßen der Steckerbuchse 17 und somit ein Offenhalten des Verschlussbleches 9 zu erleichtern.

An dem der Einlaufkante 26 gegenüberliegende Ende des Verschlussbleches 9 ist die Bodenwand 22 nach oben umgebogen und dadurch eine Rückwand 23 ausgeformt.

Die Figur 3 stellt einen Querschnitt durch den Königszapfen 24 in der Fahrzeuglängsachse dar. Das Lager 1 und der schwenkbar daran angreifende Tragrahmen 8 schließen dabei weitgehend plan mit der Unterseite des nicht näher bezeichneten Aufliegerbodens ab. Innerhalb des Tragelementes 2 ist die vordere Gehäuserückholfeder 18 zu erkennen, welche ortsfest an dem Vorsprung 35 eingehängt ist. Unterhalb der Gehäuserückholfeder 18 verläuft parallel dazu eine Führungsschiene 19.

Die Figur 4 zeigt in einer Seitenansicht eine Sattelkupplung 6 mit einer daran befestigten Steckerbuchse 17 vor dem Einkuppeln eines bereits angenäherten Königszapfens 24. Die Steckerbuchse 17 liegt in einem Niveau unterhalb des Königszapfens 24 und kann zum Einkuppeln in die Sattelkupplung 6 von diesem überfahren werden. Aufgrund der nach oben über ein Langloch 27a beweglich angebrachten Steckerbuchsenlagerung 27 ist ein Ausweichen der Steckerbuchse 17 nach oben möglich.

In der Figur 5 ist die Sattelkupplung 6 in einer perspektivischen Hinteransicht mit einer Steckerbuchse 17 dargestellt. Die in der Steckerbuchse 17 nach hinten ausgerichteten stromführenden Kontakte 17a sind von einer Verschlussblende 21 abgedeckt. Während des Einfahrens des hier nicht gezeigten Königszapfens 24 bis in einen Verschlussbereich 28 der Sattelkupplung 6 wird die Verschlussblende 21 von dem Tragelement 2 erfasst und nach oben geschwenkt, so dass die darunter befindlichen stromführenden Kontakte 17a mit dem Stecker 3 in Wirkeingriff gebracht werden können.

Die Figur 6 zeigt eine Sattelkupplung 6 mit einer maximal nach oben ausgeschwenkten Steckerbuchse 17. In dieser Position befindet sich die Steckerbuchse 17 zwischen den Seitenwänden 31 der Einfahröffnung 5. Dieses ist insbesondere dann der Fall, wenn die Sattelkupplung 6 um ihre Lagerung nach hinten in abgekuppeltem Zustand maximal abgekippt ist.

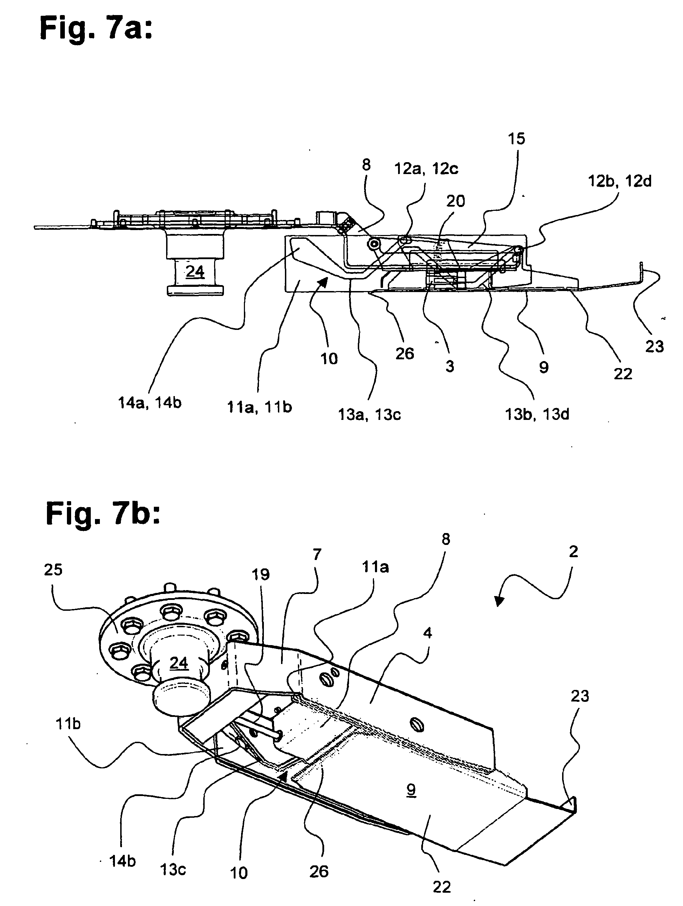

In den Figuren 7a und 7b ist die erfindungsgemäße Steckerkonsole in abgesatteltem Zustand des Aufliegers dargestellt, wobei in der Figur 7a aus Übersichtsgründen der Gehäuserahmen 4 ausgeblendet wurde. Vor dem Ankuppeln befinden sich die hintereinander liegenden Kulissenwände 11 a, 11 b in einer maximal vorgezogenen Stellung zu dem Königszapfen 24. Dabei stehen die vorderen Führungsnocken 12a, 12c des Verschlussbleches 9 in hinterer Position innerhalb der vorderen Kulissen 13a, 13b und die hinteren Führungsnocken 12b, 12d. in hinterer Position innerhalb der hinteren Kulissen 13b, 13d. Das Hebelblech 15 hat eine waagerechte Stellung weitgehend parallel zur Bodenwand 22 eingenommen. Der Stecker 3 befindet sich zwischen den Kulissenwänden 11 a, 11 b und ist nach unten durch das Verschlussblech 9 abgedeckt.

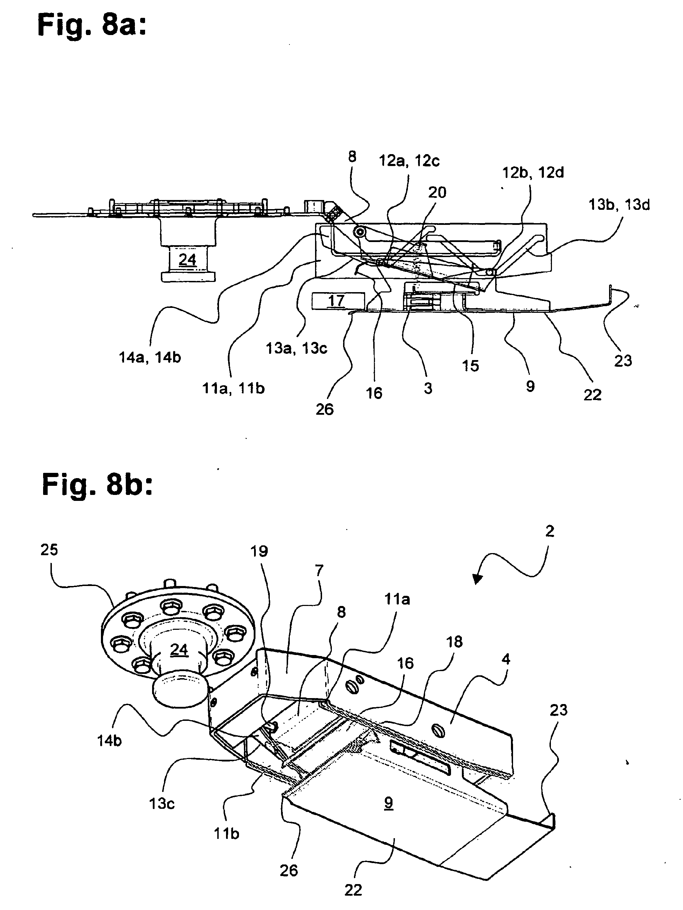

Die Figuren 8a und 8b verdeutlichen die Funktionsstellung der wesentlichen Bauteile unmittelbar vor der Kontaktierung des Steckers 3 mit der Steckerbuchse 17. In dieser Position ist der Königszapfen 24 bereits in die Sattelkupplung 6 eingefahren und hat annähernd den Verschlussbereich 28 (siehe Figur 5) erreicht. Durch die Kontaktierung des Gehäuserahmens 4 beziehungsweise dessen Abschnitte 7 mit den Seitenwänden 31 der Einfahröffnung 5 sind die Kulissenwände 11a, 11b gegenüber dem Königszapfen 24 zurückgedrückt worden. Das Hebelblech 15 hat jedoch ein Auswandern des Verschlussbleches 9 nach hinten verhindert. Dadurch befinden sich nunmehr die vorderen Führungsnocken 12a, 12c im untersten Punkt der vorderen Kulissen 13a, 13c und die hinteren Führungsnocken 12b, 12d im untersten Punkt der V-förmigen hinteren Kulissen 13b, 13d. Aufgrund des annähernd gleichen vertikalen Niveaus der vorderen Führungsnocken 12a, 12c und der hinteren Führungsnocken 12b, 12d ist das Verschlussblech 9 parallel zu seiner ursprünglichen Bereitschaftsstellung nach unten hinausgedrückt. In dieser Stellung ist die zugfahrzeugseitige Steckerbuchse 17 bereits über die Einlaufkante 26 gerutscht und hält dadurch das Verschlussblech 9 in der geöffneten Stellung.

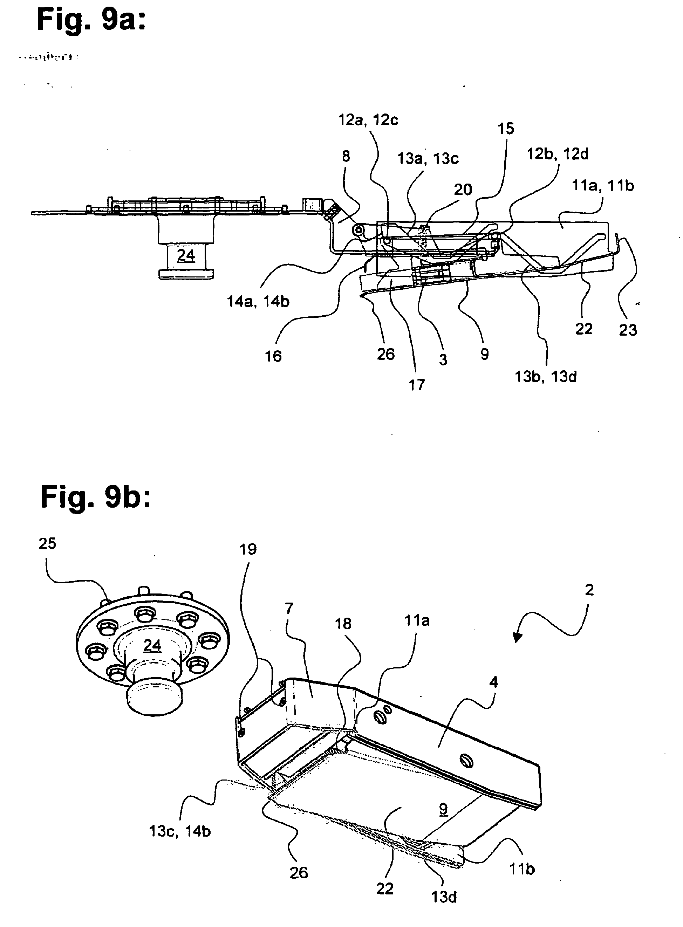

Die Funktionsstellung der Steckerkonsole nach Erreichen der Endlage des Königszapfens 24 innerhalb des Verschlussbereichs 28 bei Vorhandensein einer zugfahrzeugseitigen Steckerbuchse 17 zeigen die Figuren 9a und 9b. Die vorderen Führungsnocken 12a, 12c des Verschlussbleches 9 sind innerhalb der vorderen Kulissen 13a, 13c in eine vorderste Position und die hinteren Führungsnocken 12b, 12d innerhalb der hinteren Kulissen 13b, 13d ebenfalls in eine vorderste Position gewandert. Die Steckerbuchse 17 befindet sich in Eingriff mit dem Stecker 3, wobei die Steckerbuchse 17 teilweise aus dem Tragelement 2 herausragt und ein Schließen des Verschlussbleches 9 durch eine Vertikalfeder 20 nach oben verhindert. Die vorderen Führungsnocken 12a, 12c liegen vielmehr an den unteren Kanten der vorderen trichterförmig aufgeweiteten Kulissenschenkel 14 an. In dieser nunmehr geneigten Stellung des Verschlussbleches 9 wird das Tragelement 2 von der Rückwand 23 nach hinten überdeckt.

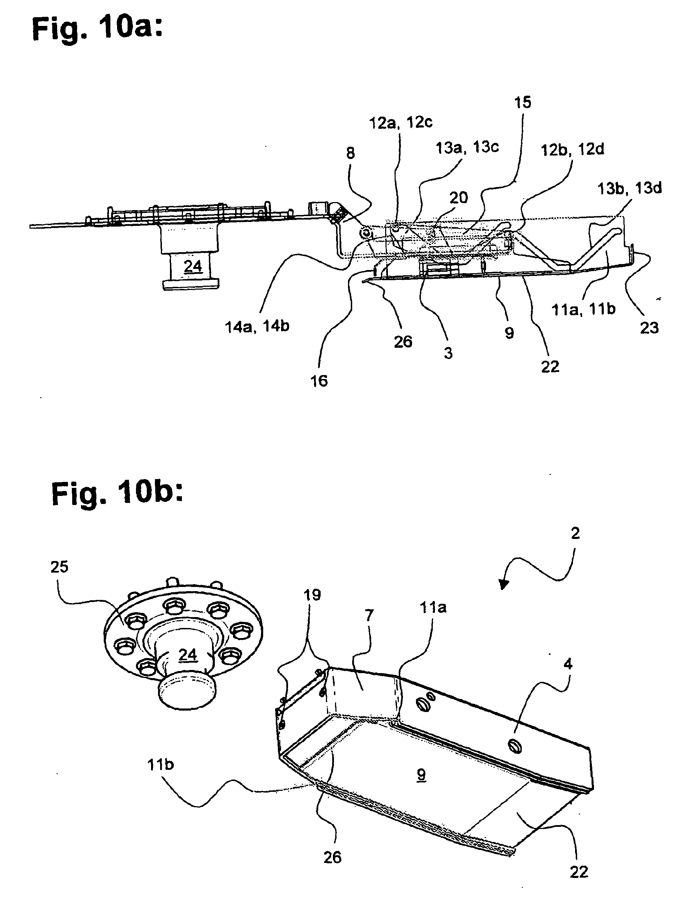

Die Figuren 10a und 10b verdeutlichen die Funktionsweise des erfindungsgemäßen Steckerkonsole in angekuppeltem Zustand des Aufliegers ohne Vorhandensein einer zugfahrzeugseitigen Steckerbuchse 17, wie es häufig bei gemischten Fuhrparks der Fall ist. In diesem Fall befinden sich die Kulissenwände 11 a, 11 b in der gleichen zurück gedrückten Stellung entsprechend der Figuren 9a, 9b. Aufgrund der fehlenden Steckerbuchse 17 und der Spannkraft zweier Vertikalfedern 20 sind die vorderen Führungsnocken 12a, 12c jedoch in den vorderen Kulissenschenkeln 14a, 14b gegen die obere Kante gezogen. Das Verschlussblech 9 ist annähernd horizontal ausgerichtet und der Stecker 3 wird nach vorne durch die Blende 16 abgedeckt. Nach hinten wird der Gehäuserahmen 4 zusätzlich von der Rückwand 23 verschlossen.

### Bezugszeichenliste

- 1: Lager
- 2: Tragelement
- 3: Stecker
- 4: Gehäuserahmen
- 5: Einfahröffnung
- 6: Sattelkupplung
- 7: Abschnitt Gehäuserahmen
- 8: Tragrahmen
- 9: Verschlussblech
- 10: Zwangsführung
- 11a, b: Kulissenwand
- 12a-d: Führungsnocken Verschlussblech
- 13a-d: Kulisse
- 14a, b: vorderer Kulissenschenkel
- 15: Hebelblech
- 16: Blende Hebelblech
- 17: Steckerbuchse
- 17a: stromführende Kontakte
- 18: Gehäuserückholfeder
- 19: Führungsschiene
- 20: Vertikalfeder
- 21: Verschlussblende Steckerbuchse
- 22: Bodenwand Verschlussblech
- 23: Rückwand Verschlussblech
- 24: Königszapfen
- 25: Befestigungsteller Königszapfen
- 26: Einlaufkante Verschlussblech
- 27: Steckerbuchsenlagerung
- 27a: Langloch Steckerbuchsenlagerung
- 28.: Verschlussbereich Sattelkupplung
- 29: Gleitlager
- 30: Rückwand Gehäuserahmen
- 31: Seitenwand Einfahröffnung
- 32a, b: Seitenlaschen Verschlussblech
- 33: vordere Befestigungsbohrung Hebelblech
- 34: hintere Befestigungsbohrung Hebelblech
- 35: Vorsprung

## Patentansprüche

1. Steckerkonsole für einen Auflieger eines Sattelzuges, umfassend ein um ein Lager (1) schwenkbares Tragelement (2) und einen in dem Tragelement (2) angeordneten Stecker (3), wobei das Tragelement (2) einen Gehäuserahmen (4) mit einem komplementär zu einer Königszapfen-Einfahröffnung (5) einer Sattelkupplung (6) ausgeformten Abschnitt (7) aufweist,
**dadurch gekennzeichnet,**
**dass** der Gehäuserahmen (4) durch Kontaktierung mit der Einfahröffnung (5) gegenüber dem Stecker (3) verschiebbar und **dadurch** der Stecker (3) aus einer geschlossenen Bereitschaftsstellung, in welcher der Stecker (3) vollständig in das kastenförmige Tragelement (2) eingetaucht ist, in eine geöffnete Kupplungsstellung verfahrbar ist.

2. Steckerkonsole nach Anspruch 1, **dadurch gekennzeichnet, dass** das Tragelement (2) einen Tragrahmen (8) umfasst, welcher an dem Lager (1) angreift.

3. Steckerkonsole nach Anspruch 2, **dadurch gekennzeichnet, dass** der Stecker (3) auf einem Verschlussblech (9) angeordnet ist, welches mittels einer Zwangsführung (10) gegenüber dem Gehäuserahmen (4) geführt ist.

4. Steckerkonsole nach Anspruch 3, **dadurch gekennzeichnet, dass** die Zwangsführung (10) eine Kulissensteuerung ist.

5. Steckerkonsole nach Anspruch 4, **dadurch gekennzeichnet, dass** die Kulissensteuerung zwei ortsfest an dem Gehäuserahmen (4) ausgebildete Kulissenwände (11a, 11 b) und darin eingreifende Führungsnocken (12a, 12b, 12c, 12d) des Verschlussbleches (9) umfasst.

6. Steckerkonsole nach Anspruch 5, **dadurch gekennzeichnet, dass** Kulissenwände (11 a, 11 b) an gegenüberliegenden Seiten des Gehäuserahmens (4) angeordnet sind.

7. Steckerkonsole nach Anspruch 5 oder 6, **dadurch gekennzeichnet, dass** die Kulissenwand (11a, 11 b) jeweils mit zwei U-förmigen Kulissen (13a, 13b, 13c, 13d) ausgebildet ist.

8. Steckerkonsole nach Anspruch 7, **dadurch gekennzeichnet, dass** die Kulissen (13a, 13b und 13c, 13d) nebeneinander in horizontaler Richtung versetzt angeordnet sind.

9. Steckerkonsole nach Anspruch 7 oder 8, **dadurch gekennzeichnet, dass** die jeweils vordere U-förmige Kulisse (13a, 13c) einen vorderen sich in Fahrtrichtung aufweitenden Schenkel (14a, 14b) aufweist.

10. Steckerkonsole nach einem der Ansprüche 3 bis 9, **dadurch gekennzeichnet, dass** das Tragelement (2) ein Hebelblech (15) aufweist, welches mit einem ersten Ende an dem Tragrahmen (8) und dem gegenüberliegenden zweiten Ende an dem Verschlussblech (9) gelenkig angreift.

11. Steckerkonsole nach Anspruch 10, **dadurch gekennzeichnet, dass** das Hebelblech (15) oder der Tragrahmen (8) mit einer Blende (16) ausgebildet ist, welche in zurückgefahrener Position des Gehäuserahmens (4) ohne Vorhandensein einer zugfahrzeugseitigen Steckerbuchse (17) den Stecker (3) abdeckt.

12. Steckerkonsole nach Anspruch 10 oder 11, **dadurch gekennzeichnet, dass** zwischen dem Tragrahmen (8) oder dem Hebelblech (15) und dem Gehäuserahmen (4) mindestens eine Gehäuserückholfeder (18) angeordnet ist.

13. Steckerkonsole nach einem der Ansprüche 1 bis 12, **dadurch gekennzeichnet, dass** in dem Gehäuserahmen (4) in Längsrichtung mindestens eine Führungsschiene (19) angeordnet ist.

14. Steckerkonsole nach Anspruch 13, **dadurch gekennzeichnet, dass** die mindestens eine Führungsschiene (19) durch den Tragrahmen (8) hindurchgeführt ist.

15. Steckerkonsole nach einem der Ansprüche 3 bis 12, **dadurch gekennzeichnet, dass** zwischen dem Tragrahmen (8) oder einem Hebelblech (15) und dem Verschlussblech (9) mindestens eine Vertikalfeder (20) angeordnet ist.

16. Steckerkonsole nach einem der Ansprüche 3 bis 12, **dadurch gekennzeichnet, dass** das Verschlussblech (9) flexibel ausgestaltet und in geschlossener Stellung vorgespannt eingebaut ist.

17. Steckkupplungssystem mit einer aufliegerseitigen Steckerkonsole nach einem der Ansprüche 1 bis 16 und eine unterhalb einer Einfahröffnung (5) einer Sattelkupplung (6) angeordnete Steckerbuchse (17), wobei die Steckerbuchse (17) in angekuppeltem Zustand des Aufliegers mit dem Stecker (3) kontaktiert und nach der Kontaktierung vertikal schwenkbar befestigt ist,
**dadurch gekennzeichnet,**
**dass** der Gehäuserahmen (4) durch Kontaktierung mit der Einfahröffnung (5) gegenüber dem Stecker (3) verschiebbar und
**dadurch** der Stecker (3) aus einer geschlossenen Bereitschaftsstellung in eine geöffnete Kupplungsstellung verfahrbar ist, wobei die Steckerbuchse (17) eine Verschlussblende (21) aufweist.

18. Steckkupplungssystem nach Anspruch 17, **dadurch gekennzeichnet, dass** das Tragelement (2) bei Annäherung an die Verschlussblende (21) diese aufstößt.

19. Steckkupplungssystem nach Anspruch 17 oder 18, **dadurch gekennzeichnet, dass** nach dem Kontaktieren von Stecker (3) und Steckerbuchse (17) eine Vertikalbewegung erfolgt, bei welcher ein Verriegelungselement der Steckerbuchse (17) formschlüssig an den Stecker (3) greift.

## Claims

1. Connection console for a semitrailer of a semitrailer vehicle, comprising a carrier element (2) which can be pivoted about a bearing (1) and a connector (3) which is arranged in the carrier element (2), with the carrier element (2) having a housing frame (4) having a portion (7) which is shaped so as to correspond to a kingpin introduction opening (5) of a fifth wheel (6),
**characterised in that**
the housing frame (4) can be displaced relative to the connector (3) by contacting with the introduction opening (5) and the connector (3) can thereby be displaced out of a closed ready position, in which the connector is completely introduced into the box-like carrier element, into an open coupling position.

2. Connection console according to claim 1,
**characterised in that** the carrier element (2) comprises a carrier frame (8) which engages with the bearing (1).

3. Connection console according to claim 2,
**characterised in that** the connector (3) is arranged on a closure plate (9) which is guided relative to the housing frame (4) by means of a restricted guide (10).

4. Connection console according to claim 3,
**characterised in that** the restricted guide (10) is a slot-like control.

5. Connection console according to claim 4,
**characterised in that** the slot-like control comprises two slotted walls (11a, 11b) which are constructed so as to be fixed in position on the housing frame (4) and guide cams (12a, 12b, 12c, 12d) of the closure plate (9) which engage therein.

6. Connection console according to claim 5,
**characterised in that** slotted walls (11a, 11b) are arranged at opposite sides of the housing frame (4).

7. Connection console according to claim 5 or claim 6, **characterised in that** the slotted wall (11a, 11b) is constructed so as to have two U-shaped slotted members (13a, 13b, 13c, 13d).

8. Connection console according to claim 7,
**characterised in that** the slotted members (13a, 13b and 13c, 13d) are arranged beside each other so as to be displaced in a horizontal direction.

9. Connection console according to claim 7 or claim 8, **characterised in that** the front U-shaped slotted member (13a, 13c) has a front member (14a, 14b) which widens in the direction of travel.

10. Connection console according to any one of claims 3 to 9, **characterised in that** the carrier element (2) has a lever plate (15) which engages in an articulated manner via a first end with the carrier frame (8) and, via the opposite second end, with the closure plate (9).

11. Connection console according to claim 10,
**characterised in that** the lever plate (15) or the carrier frame (8) is constructed so as to have a plate (16) which covers the connector (3) in the withdrawn position of the housing frame (4) without a connection bush (17) being provided at the traction vehicle side.

12. Connection console according to claim 10 or claim 11, **characterised in that** at least one housing return spring (18) is arranged between the carrier frame (8) or the lever plate (15) and the housing frame (4).

13. Connection console according to any one of claims 1 to 12, **characterised in that** at least one guide rail (19) is arranged in the housing frame (4) in a longitudinal direction.

14. Connection console according to claim 13,
**characterised in that** the at least one guide rail (19) is guided through the carrier frame (8).

15. Connection console according to any one of claims 3 to 12, **characterised in that** at least one vertical spring (20) is arranged between the carrier frame (8) and the closure plate (9).

16. Connection console according to any one of claims 3 to 12, **characterised in that** the closure plate (9) is constructed so as to be flexible and fitted so as to be pretensioned in a closed position.

17. Plug type coupling system having a connection console at the semitrailer side according to any one of claims 1 to 16 and a connection bush (17) which is arranged below an introduction opening (5) of a fifth wheel (6), with the connection bush (17) being secured so as to be contacted when the semitrailer is in the state coupled to the connector (3) and vertically pivotable after contacting,
**characterised in that** the housing frame (4) can be displaced relative to the connector (3) by contacting with the introduction opening (5) and the connector (3) can thereby be displaced out of a closed ready position into an open coupling position, with the connector bush (17) having a closure plate (21).

18. Plug type coupling system according to claim 17,
**characterised in that** the carrier element (2) comes into contact with the closure plate (21) when it is moved towards the closure plate (21).

19. Plug type coupling system according to claim 17 or claim 18, **characterised in that**, after the contacting between the connector (3) and connector bush (17), there is carried out a vertical movement during which a locking element of the connector bush (17) engages with the connector (3) in a positive-locking manner.

## Revendications

1. Console d'emboîtement pour une semi-remorque de train routier, comprenant un élément de support (2) pouvant pivoter autour d'un palier (1), et une pièce d'enfichage (3) logée dans ledit élément de support (2), l'élément de support (2) présentant un caisson (4) muni d'une région (7) de configuration complémentaire de celle d'un orifice (5) d'insertion du pivot central d'une sellette d'attelage (6),
**caractérisée par le fait**
**que** le caisson (4) peut être animé de coulissements, vis-à-vis de la pièce d'enfichage (3), par venue en contact avec l'orifice d'insertion (5), de sorte que ladite pièce d'enfichage (3) est mobile vers une position ouverte d'accouplement à partir d'une position fermée d'attente dans laquelle ladite pièce d'enfichage est totalement intégrée dans l'élément de support en forme de caisson.

2. Console d'emboîtement selon la revendication 1, **caractérisée par le fait que** l'élément de support (2) englobe un cadre de support (8) venant en prise avec le palier (1).

3. Console d'emboîtement selon la revendication 2, **caractérisée par le fait que** la pièce d'enfichage (3) est située sur une tôle de fermeture (9) guidée, par rapport au caisson (4), par l'intermédiaire d'un système (10) de guidage forcé.

4. Console d'emboîtement selon la revendication 3, **caractérisée par le fait que** le système (10) de guidage forcé est une commande par coulisses.

5. Console d'emboîtement selon la revendication 4, **caractérisée par le fait que** la commande par coulisses englobe deux parois (11a, 11b) à coulisses, de réalisation stationnaire sur le caisson (4), et des tétons (12a, 12b, 12c, 12d) de guidage de la tôle de fermeture (9), qui pénètrent dans lesdites parois.

6. Console d'emboîtement selon la revendication 5, **caractérisée par le fait que** des parois (11a, 11b) à coulisses se trouvent sur des côtés du caisson (4) mutuellement opposés.

7. Console d'emboîtement selon la revendication 5 ou 6, **caractérisée par le fait que** la paroi (11a, 11b) à coulisses est respectivement munie de deux coulisses (13a, 13b, 13c, 13d) configurées en U.

8. Console d'emboîtement selon la revendication 7, **caractérisée par le fait que** les coulisses (13a, 13b et 13c, 13d) sont agencées en juxtaposition décalée dans la direction horizontale.

9. Console d'emboîtement selon la revendication 7 ou 8, **caractérisée par le fait que** la coulisse (13a, 13c) configurée en U, respectivement située à l'avant, offre une branche antérieure (14a, 14b) s'élargissant dans la direction de déplacement.

10. Console d'emboîtement selon l'une des revendications 3 à 9,
**caractérisée par le fait que** l'élément de support (2) présente une tôle (15) formant levier venant en prise de manière articulée avec le cadre de support (8), par une première extrémité, et avec la tôle de fermeture (9) par la seconde extrémité opposée.

11. Console d'emboîtement selon la revendication 10, **caractérisée par le fait que** la tôle (15) formant levier ou le cadre de support (8) est doté(e) d'un organe d'occultation (16) qui recouvre la pièce d'enfichage (3) dans une position rétractée du caisson (4), sans la présence d'une douille de connexion (17) située côté tracteur.

12. Console d'emboîtement selon la revendication 10 ou 11,
**caractérisée par le fait qu'**au moins un ressort (18) de rappel du caisson est interposé entre ledit caisson (4) et le cadre de support (8), ou la tôle (15) formant levier.

13. Console d'emboîtement selon l'une des revendications 1 à 12,
**caractérisée par le fait qu'**au moins une glissière de guidage (19) est disposée longitudinalement dans le caisson (4).

14. Console d'emboîtement selon la revendication 13, **caractérisée par le fait que** la glissière de guidage (19), prévue au minimum, traverse le cadre de support (8).

15. Console d'emboîtement selon l'une des revendications 3 à 12,
**caractérisée par le fait qu'**au moins un ressort vertical (20) est interposé entre le cadre de support (8) et la tôle de fermeture (9).

16. Console d'emboîtement selon l'une des revendications 3 à 12,
**caractérisée par le fait que** la tôle de fermeture (9) est de réalisation flexible, et est intégrée avec précontrainte en position fermée.

17. Système d'accouplement par emboîtement muni d'une console d'emboîtement située côté semi-remorque, selon l'une des revendications 1 à 16, et une douille de connexion (17) située au-dessous d'un orifice d'insertion (5) d'une sellette d'attelage (6), sachant que ladite douille de connexion (17) est mise en contact avec la pièce d'enfichage (3) à l'état accouplé de la semi-remorque, et est fixée à pivotement vertical après la mise en contact,
**caractérisé par le fait**
**que** le caisson (4) peut être animé de coulissements, vis-à-vis de la pièce d'enfichage (3), par venue en contact avec ledit orifice d'insertion (5), de sorte que ladite pièce d'enfichage (3) est mobile d'une position fermée d'attente à une position ouverte d'accouplement, la douille de connexion (17) étant pourvue d'un écran obturateur (21).

18. Système d'accouplement par emboîtement selon la revendication 17, **caractérisé par le fait que** l'élément de support (2) vient buter contre l'écran obturateur (21) lorsqu'il se rapproche de ce dernier.

19. Système d'accouplement par emboîtement selon la revendication 17 ou 18, **caractérisé par le fait qu'**il s'opère, après la venue en contact entre la pièce d'enfichage (3) et la douille de connexion (17), un mouvement vertical au cours duquel un élément de verrouillage de ladite douille de connexion (17) vient en prise, par concordance de formes, avec ladite pièce d'enfichage (3).
